# EUROPEAN PATENT APPLICATION

(11) **EP 3 895 919 A1**
(43) Date of publication of application: **20.10.2021**
(21) Application number: 20169587.1
(22) Date of filing: 15.04.2020
(51) Int. Cl.: B60H 1/00, F25B 39/04, F25B 40/02, F25B 41/04, F28B 9/08

(54) **CONDENSER**

(71) Applicant: Valeo Klimasysteme GmbH, 96476 Bad Rodach (DE)
(72) Inventor: SEKTI, Condro, 74321 Bietigheim-Bissingen (DE); LILGE, Hans Joachim, 74321 Bietigheim-Bissingen (DE)
(74) Representative: Valeo Systèmes Thermiques

(57) **Abstract**

A condenser (1) for a refrigerant, comprising a core (20) with core channels forming a condensing section (25), and a bottle (30), wherein it further comprises a bottle inlet channel (41) and a bottle outlet channel (42), the bottle (30) being connected to the condensing section (25) by the bottle inlet channel (41) arranged at a first side of the bottle (30), wherein the condenser (1) comprises flow restricting means (43) adapted to enable refrigerant flow from the condensing section (25) to the bottle (30) and to block the refrigerant flow from the bottle (30) to the condensing section (25).

## Description

### FIELD OF THE INVENTION

The invention relates to heat exchangers with bottles, in particular to condensers with bottles, which are part of an air conditioning loop.

### BACKGROUND OF THE INVENTION

There are known condensers equipped with bottles, which are part of air conditioning systems (AC systems). The condenser can be placed within an AC system so that the refrigerant enters the heat exchanger through the condensing section and leaves the heat exchanger after passing through the subcooling section or directly from a bottle. The bottle is attached to the core at least by an inlet channel, and preferably also an outlet channel, so that the refrigerant supplied to the core is enabled to leave the condensing section and enter the bottle through the inlet channel, and then after leaving the bottle through the outlet channel either enter the subcooling section or exit the heat exchanger directly from the bottle.

When the AC system is launched for the first time, the refrigerant fills all the components. In particular, it fills the condensing section and at least partly the bottle. If the subcooling section is present, it is filled with liquid refrigerant. If the AC system is turned off after a period of operation, with refrigerant present in all the components, the liquid may flow out of the bottle and return to condensing section which is mainly intended for refrigerant in gaseous state. Upon subsequent turning the AC system on, i.e. switching on the compressor, the pressure in the system may reach an unsafe, high value because of the liquid refrigerant present in the condensing section coming from the bottle. This occurs especially when the inlet and outlet channels of the bottle are on the bottom of said bottle, although it may occur also in other configurations, e.g. when the bottle is in horizontal arrangement and the inlet and outlet channels are on the side, or when the outlet channel is on the other side of the bottle. This problem is even more pronounced if the inlet and outlet channels are at the same level, i.e. they run on the same level with respect to the ground. In most situations, this will lead to switching off the compressor and the system for preventing damage. Naturally, this prevents effective and safe functioning of the AC system.

It would be desirable to provide a condenser with a bottle, which would be adapted for vertical operation and which would prevent reaching dangerously high levels of pressure within AC system.

### SUMMARY OF THE INVENTION

The object of the invention is, among others, a condenser for a refrigerant, comprising a core with core channels forming a condensing section, and a bottle, wherein it further comprises a bottle inlet channel and a bottle outlet channel, the bottle being connected to the condensing section by the bottle inlet channel arranged at a first side of the bottle, characterized in that the condenser comprises flow restricting means adapted to enable refrigerant flow from the condensing section to the bottle and to block the refrigerant flow from the bottle to the condensing section.

Preferably, the flow restricting means are located in the bottle inlet channel.

Preferably, the bottle outlet channel is arranged at the first side of the bottle.

Preferably, the bottle outlet channel is arranged at the second side of the bottle, opposite to the first side of the bottle.

Preferably, the bottle inlet and outlet channels are partly comprised within the bottle, the flow restricting means being located within the bottle.

Preferably, the bottle inlet and outlet channels are partly comprised within a connection block located between the bottle and the core, the flow restricting means being located within the connection block.

Preferably, the bottle outlet channel is at least partly constituted by an outlet connection line connecting the bottle and the core, the flow restricting means being located within the outlet connecting line.

Preferably, the flow restricting means is a shut-off valve.

Preferably, the shut-off valve is a mechanical check valve.

The shut-off valve might also be an electromechanically or electronically driven valve.

Preferably, the condenser further comprises a subcooling section connected fluidically to the bottle outlet channel.

Preferably, the core channels are arranged in parallel to the main axis of the bottle.

Preferably, the core channels are arranged perpendicularly to the main axis of the bottle.

In one example, the condenser is adapted for mounting in the horizontal arrangement so that the core channels run substantially parallel to the ground.

In another example, the condenser is adapted for mounting in the vertical arrangement so that the core channels run substantially perpendicularly to the ground.

Preferably, the core has a multi-pass configuration.

In one example, the condenser is a plate condenser.

In another example, the condenser is an air condenser.

Another object of the invention is an air conditioning system comprising a compressor and a condenser as described.

Another object of the invention is a vehicle comprising an air conditioning system as described.

### BRIEF DESCRITPTION OF DRAWINGS

Examples of the invention will be apparent from and described in detail with reference to the accompanying drawings, in which:
- Fig. 1: shows the heat exchanger according to the invention in perspective view;
- Fig. 2: shows a first cross-section of the heat exchanger;
- Fig. 3: shows a second cross-section of the heat exchanger;
- Fig. 4: presents another example of a heat exchanger according to the invention;
- Fig. 5: shows yet another example of a heat exchanger according to the invention.

### DETAILED DESCRIPTION OF EMBODIMENTS

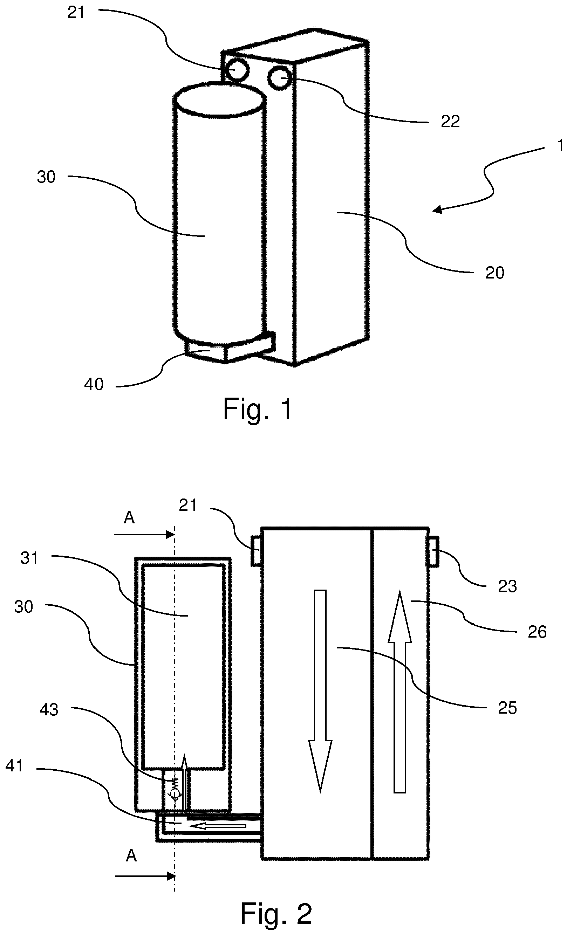

Fig. 1 shows the heat exchanger 1 according to the invention in perspective view. The heat exchanger 1 may be a plate condenser comprising a core 20 and a bottle 30, configured for heat exchange between a refrigerant and a coolant flowing.

In some arrangements, the bottle may be in vertical configuration with respect to the vehicle and/or ground, and the core may also be in vertical arrangement. In those arrangements, the inlet to the bottle may be located at the bottom of said bottle.

In general, the whole heat exchanger 1 may be configured for vertical mounting and operation, i.e. the bottle 30 may be arranged vertically so that its main axis is perpendicular to the ground, while the core channels of the core 20 are arranged perpendicularly with respect to the ground so that the channels created between them run substantially along the vertical direction. By the term core channels it is meant channels in the core created to run in parallel and enable flow of the refrigerant, within one pass or in a multi-pass configuration. The refrigerant exchanges heat with coolant flowing between the core channels.

The condenser comprises refrigerant inlet 21 and outlet 23. It may also have a coolant inlet (not shown) and a coolant outlet 22. The condenser core 20 has a condensing section 25. It may also further have a subcooling section 26, for example arranged by part of the core channels of the core 20. The condensing section 25 is foreseen for condensing the gaseous refrigerant, while the subcooling section 26 is foreseen for cooling the condensed refrigerant. The bottle 30 is connected to the outlet of the condensing section 25. It may also be interposed fluidically between the condensing section 25 and the subcooling section 26.

The bottle 30 may serve as a receiver drier as known in the art. One of the purposes of the bottle 30 may be to store fluid to compensate any refrigerant losses within the AC system. The bottle 30 may be directly attached to the core 20, e.g. to the condensing section 25 or the subcooling section 26.

The condenser 1 is placed within an AC system so that the refrigerant enters the heat exchanger 1 through the condensing section 25 and leaves the heat exchanger 1 after passing through the subcooling section 26. If there is no dedicated subcooling section 26, the refrigerant will leave the heat exchanger 1 after exiting the bottle 30.

The heat exchanger comprises a bottle inlet channel 41 and a bottle outlet channel 42 for supplying the refrigerant to and receiving the refrigerant from the bottle 30. They may be wholly or partially arranged within a connection block 40, as explained below. They may also wholly or partially by arranged within the core 20, or they may be wholly or partially by arranged within the core 20.

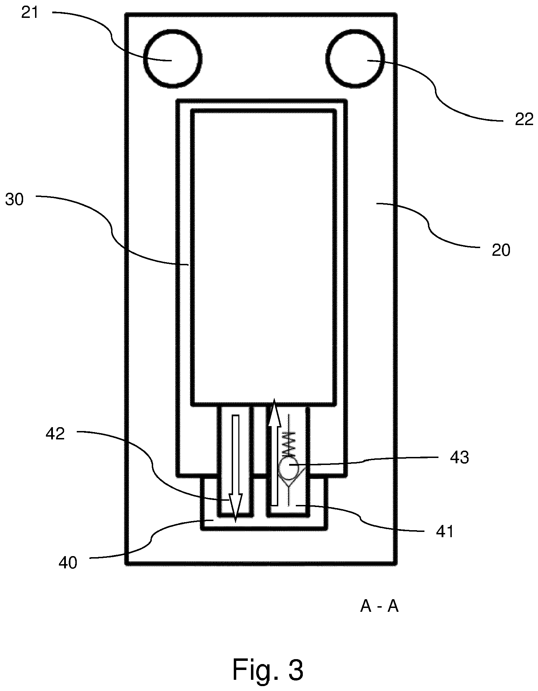

Fig. 2 shows a first cross-section of the heat exchanger, while Fig. 3 shows a second cross-section of the heat exchanger. Fig. 2 indicates flow direction of the refrigerant within the heat exchanger. The refrigerant enters through refrigerant 21, travels through condensing section 25, enters the bottle 30 through bottle inlet channel 41. Subsequently, it leaves the bottle 30 through bottle outlet channel 42 and enters subcooling section 26 through channel created within the condensing section 25 (not shown). It then leaves through refrigerant outlet 23. The condenser may also have a multi-pass configuration, i.e. enable meandering flow of the refrigerant within the sections.

The bottle inlet channel 41 comprises flow restricting means 43 adapted to enable refrigerant flow from the condensing section 25 to the bottle 30 and to block the refrigerant flow from the bottle 30 to the condensing section 25. Consequently, when the compressor in the AC system is turned off, the refrigerant will not travel back from the bottle 30, e.g. from the internal volume 31, to the condensing section 25. The flow restricting means 43 may be adjustable. Preferably, the flow restricting means 43 are a shut-off valve, e.g. a check valve. The valve may be electronically controlled.

As shown in the figures, the bottle outlet channel 42 is arranged at the bottom of the bottle 30. Preferably, the bottle inlet channel 41 and the bottle outlet channel 42 are at the same level for compact configuration and maximizing available space for bottle inner volume.

The bottle inlet and outlet channels 41, 42 are partly comprised within the bottle 30, the flow restricting means 43 being located within the bottle 30.

Alternatively, the bottle inlet and outlet channels 41, 42 may be partly comprised within a connection block 40 located between the bottle 30 and the core 20, the flow restricting means 43 being located within the connection block 40.

In another configuration, the bottle outlet channel 42 may be at least partly constituted by an outlet connection line connecting the bottle 30 and the core 20, the flow restricting means 43 being located within the outlet connecting line.

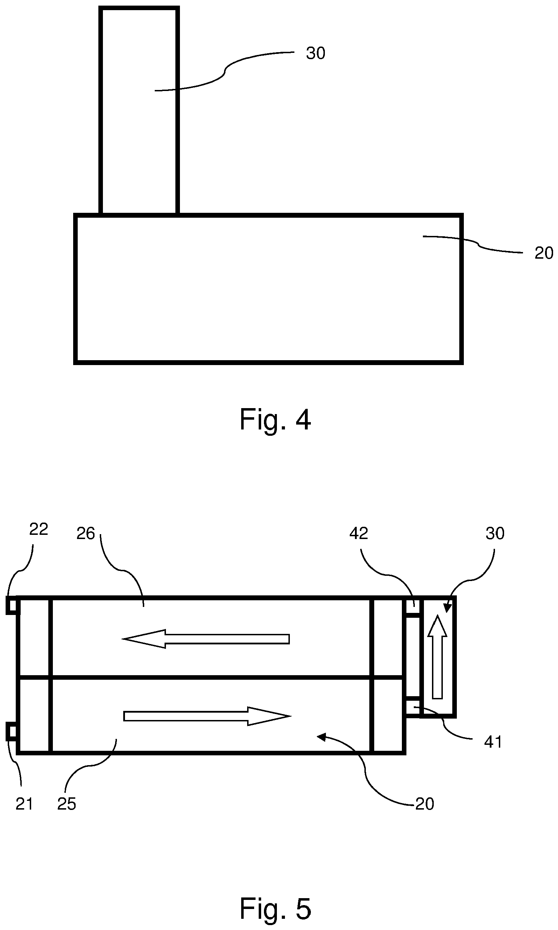

A condenser may be a plate condenser as shown. In Fig. 4 there is shown an arrangement in which the core 20 is in perpendicular arrangement with respect to the bottle 30.

As shown in Fig. 5, the condenser may also be an air condenser, comprising a core of tubes exchanging heat with air flowing around and between them. The bottle outlet channel 42 is arranged at the second side of the bottle 30, opposite to the first side of the bottle 30 with a bottle inlet channel 41.

The overall benefit of the invention is reducing or eliminating a high or peak pressure at the inlet of the condenser, which has an impact on compressor power and coefficient of performance of the air conditioning system.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A condenser 1 for a refrigerant, comprising a core 20 with core channels forming a condensing section 25, and a bottle 30, wherein it further comprises a bottle inlet channel 41 and a bottle outlet channel 42, the bottle 30 being connected to the condensing section 25 by the bottle inlet channel 41 arranged at a first side of the bottle 30, **characterized in that** the condenser 1 comprises flow restricting means 43 adapted to enable refrigerant flow from the condensing section 25 to the bottle 30 and to block the refrigerant flow from the bottle 30 to the condensing section 25.

2. A condenser according to claim 1, wherein the flow restricting means 43 are located in the bottle inlet channel 41.

3. A condenser according to any preceding claim, wherein the bottle outlet channel 42 is arranged at the first side of the bottle 30.

4. A condenser according to any of claims 1-2, wherein the bottle outlet channel 42 is arranged at the second side of the bottle 30, opposite to the first side of the bottle 30.

5. A condenser according to any preceding claim, wherein the bottle inlet and outlet channels 41, 42 are partly comprised within the bottle 30, the flow restricting means 43 being located within the bottle 30.

6. A condenser according to any of claims 1-4, wherein the bottle inlet and outlet channels 41, 42 are partly comprised within a connection block 40 located between the bottle 30 and the core 20, the flow restricting means 43 being located within the connection block 40.

7. A condenser according to any of claims 1-4, wherein the bottle outlet channel 42 is at least partly constituted by an outlet connection line connecting the bottle 30 and the core 20, the flow restricting means 43 being located within the outlet connecting line.

8. A condenser according to any preceding claim, wherein the flow restricting means 43 is a check-valve.

9. A condenser according to claim 8, wherein the shut-off valve is electronically controlled.

10. A condenser according to any preceding claim, wherein it further comprises a subcooling section 26 connected fluidically to the bottle outlet channel 42.

11. A condenser according to any preceding claim, wherein the core channels are arranged in parallel to the main axis of the bottle 30.

12. A condenser according to any preceding claim, wherein the core channels are arranged perpendicularly to the main axis of the bottle 30.

13. A condenser according to any preceding claim, wherein the condenser is a plate condenser.

14. An air conditioning system comprising a compressor and a condenser 1 according to any preceding claim.

15. A vehicle comprising an air conditioning system according to claim 14.
